# EUROPEAN PATENT SPECIFICATION

(11) **EP 1 563 659 B1**
(45) Date of publication and mention of the grant of the patent: **15.04.2009**
(21) Application number: 02783933.1
(22) Date of filing: 07.11.2002
(51) Int. Cl.: H04L 27/26

(54) **PAPR reduction**
PAPR-Reduktion
Réduction de PAPR

(43) Date of publication of application: 17.08.2005
(73) Proprietor: TELEFONAKTIEBOLAGET LM ERICSSON (publ), 164 83 Stockholm (SE)
(72) Inventor: LINDSKOG, Jan, S-435 43 Pixbo (SE); RYDNELL, Gunnar, S-421 59 Västra Frölunda (SE); WALTHER, Roger, S-431 37 Mölndal (SE); KRONQUIST, Göran, S-443 70 Grabo (SE); SJÖBERG, Sten, S-438 33 Landvetter (SE)
(74) Representative: Vejgaard, Christian
(86) International application number: PCT/SE2002/002033
(87) International publication number: WO 2004/043028

(56) References cited:
- EP-A- 1 056 250
- EP-A1- 1 061 705
- WO-A2-01/52441
- WO-A2-01/56239
- US-A- 5 381 449
- WAKUTSU T. ET AL.: 'A novel carrier frequency offset estimation scheme for OFDM systems utilizing correlation with a pilot symbol without null sub-carrier' VEHICULAR TECHNOLOGY CONFERENCE, 1000 IEEE July 1999, pages 113 - 117, XP010341920
- FERNANDEZ-GETINO GARCIA M.J. ET AL: 'JOINT CHANNEL ESTIMATION AND PEAK-TO-AVERAGE POWER REDUCTION IN COHERENT OFDM: A NOVEL APPROACH' VTC 2001 SPRING. IEEE VTS 53RD. VEHICULAR TECHNOLOGY CONFERENCE 06 May 2001, NEW YORK, USA, pages 815 - 819, XP001067074
- FERNANDEZ-GETINO GARCIA M.J. ET AL: 'Orthogonal pilot sequences for peak-to-average power reduction in OFDM' VTC FALL 2001. IEEE 54TH. VEHICULAR TECHNOLOGY CONFERENCE. PROCEEDINGS. ATLANTIC CITY, NJ 07 October 2001, NEW YORK, USA, pages 650 - 654, XP010562508

## Description

### Field of the invention

This invention pertains to the area of wireless radio access technology. More particular, the present invention concerns methods and systems using orthogonal frequency division multiplexing (OFDM), such as Wireless LANs (WLAN).

### Background of the invention

A well-known problem in OFDM modulation is high PAPR (Peek to Average Power Ratio) values. High PAPR values occur since it is not possible to control the power level for each symbol when constructing the OFDM (Orthogonal Frequency Division Multiplex) waveform.

The optimal situation for error free transmission is to have a stable constant PAPR level throughout the transmission of individual packets, in order for the power amplifier (PA) to work well. The PA is typically linear only over a limited range in power level, and thus high fluctuations in PAPR level causes the PA to behave non-linearly. Non-linearity of the PA is devastating for the Bit error rate (BER)/ Packet error rate (PER) of QAM (Quadrature Amplitude Modulation)-signalling.

There are well known solutions to the classical problem of excessively high PAPR levels, namely to re-code the data, re-scramble the data or to insert extra data bits that "levels out" the original data and creates a more favourable PAPR level. However, there are drawbacks to these solutions.

Typically, the known solutions are computational intensive, introduce delays, or introduce extra bits that decrease the data rate. There are no known algorithms how to re-code or introduce "compensation-bits" and thus trial-and-error must be used.

The current standard for WLAN IEEE802.11 is about to gain success in being wide spread to customers with the purpose of replacing wired Ethernet LANs with wireless access. The current deployed standard 802.11b, is using the 2.4 GHZ unlicensed band. It is forecasted that if the current rate of deployment continues, the spectrum in the 2.4 GHz band will soon be insufficient and that a migration to 5 GHz and 802.11a will take place. The 802.11 a specification uses OFDM signalling at the PHY (physical) layer. The OFDM modulated 802.11 a PHY layer is sensitive to fluctuations in PAPR level.

Recently, a IEEE 802.16 Study Group on Mobile Broadband Wireless Access (MBWA) IEEE 802.16, has addressed radio access for stations in fast moving vehicles with speeds up to 200 mph. However, it is not possible to use the 802.11 a physical (PHY) layer for mobile stations moving at a high speed and being exposed to adverse signalling conditions.

The MBWA requires pilot symbols evenly distributed - at a certain pilot-to-data ratio, PDR - throughout a packet in order for the frequency tracking and channel estimation mechanism to function for fast moving stations.

Prior art document US-5381449 describes a transmitter used in a QAM communication system. An exemplary transmitter has four channels, in which pilot symbols are inserted in the stream of payload data being provided in each channel. The pilot signals may constitute non-constellation points, i.e. not overlap with the constellation points of the payload data, while other pilot signals constitute constellation point signals. For instance, four pilot signals are inserted simultaneously in each sub channel.

At least one pilot symbol will be selected to be off the constellation of values in order to maximally reduce the peak to average power level in the composite signal of a QAM system. It is alleged in D1, that "by appropriate manipulation of the complex valued pilot symbols inserted by the pilot insertion units, the PAPR of the composite signal can be substantially reduced when "various probabilistic factors of the data" with which they are combined with are considered".

In the above document, the payload signals are not always taken into account when reducing PAPR. Hence, it is understood that the effects as to reduce PAPR is quite limited in relation to the present invention. At certain symbol times, only pilot signals are transmitted - hence no optimization with regard to PAPR is accomplished taking payload signals into account. At other symbol times, only payload signals are transmitted. Hence, neither at these time instants is it possible to optimize PAPR.

Moreover, since it can not immediately be known which payload signals are to be transmitted at a given symbol time - and no provisions for finding out are mentioned in the above document - it is undisclosed how - at symbol time instants where both payload data and pilot signals are transmitted simultaneously - a corresponding envelope signal corresponding to the sum of sub-channels could be PAPR optimized or reduced taking account of payload data.

Prior art document "Othogonal Pilot Sequences for peak-to Average Power Reduction in OFDM", By M. Julia Femandez-Getino Garcia, Jose M. Páez-Borallo, Ove Edfors, IEEE, 2001 the problem of large PAR signals passing through non-linear devices generating spectral spreading and out-of-band radiation is addressed. The paper suggests a pilot aided PAR reduction, wherein adequate pilot symbols are carefully selected in order to build peak power optimized sequences. To decrease side information it is proposed to use finite sets of orthogonal pilot sequences. Also a blind detection can be performed without prior knowledge of any side information at the receiver.

Prior art document "Joint Channel Estimation and Peak-to Average Power Reduction in Coherent OFDM: A novel approach", By M. Julia Fernández-Getino García, Ove Edfors,Jose M. Páez-Borallo, IEEE, 2001 shows a pilot aided PAR reduction scheme wherein sub optimal pilots values dependent on the data stream are inserted. In order to reduce side information, the given pilot with the lowest PAR is selected after comparison from a small set of predefined of pilots. It has been found that there is always a pilot which drastically reduces PAR. A method of pilot insertion is suggested whereby some pilot tones are inserted for channel estimation while other are inserted for PAR reduction. It is suggested that a number of side carriers are provided whose number is equal with the number of bits for coding the side information. This document forms the respective preambles of claims 1, 7 and 13.

### Summary of the invention

It is a first object of the invention to set forth a method for decreasing the level of fluctuation of the PAPR level but without causing a data rate penalty and obviating additional carriers for side information.

This object has been achieved by the subject matter set forth by claim 1.

It is a further object to set forth a transmitter providing robust data transmission and low PAPR values.

This object has been achieved by the subject matter set forth by claim 7.

Further advantages will appear from the following detailed description of the invention.

### Brief description of the drawings

- Fig. 1: shows a typical transmitter,
- fig. 2: shows a typical receiver,
- fig. 3: shows an OFDM modulation scheme,
- fig. 4: discloses a transmitter according to a first embodiment of the invention,
- fig. 6: discloses a receiver according to the first and second embodiment of the invention,
- fig. 7: shows pilot configurations according to a first embodiment of the invention,
- fig. 8: is a schematic illustration of the PAPR level for two alternative pilot configurations,
- fig. 9: shows a format for transmitted / received frames according to a first embodiment of the invention, and
- fig. 10: relates to the calculation of pilot configurations according to the first embodiment of the invention,
- fig. 11 and 12: shows other exemplary pilot configurations.

### Description of preferred embodiments of the invention

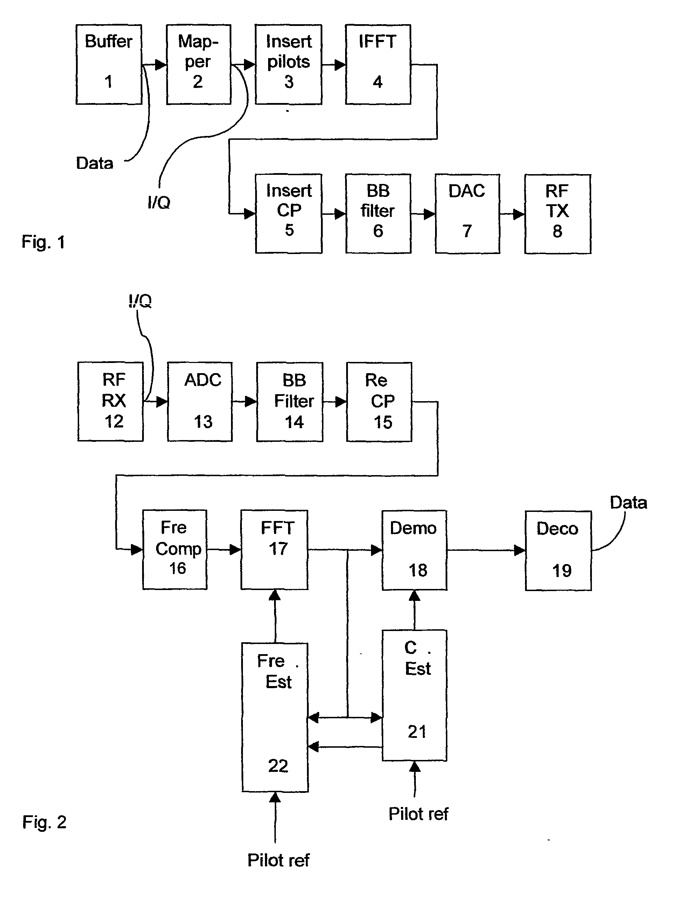

In figure 1, a conventional transmitter has been shown, comprising a buffer stage 1 for intermediately storing incoming payload data arranged in frames to be transmitted. The transmitter comprises a mapping stage (2) in which the payload data is mapped into complex symbols being defined by real, I, and complex, Q, components using for instance a BPSK or QAM modulation scheme. The transmitter moreover comprises a pilot insertion stage for interspersing appropriate pilot symbols in the stream of symbols carrying the payload data; an Inverse Fast Fourier Transform stage (IFFT) for mapping the BPSK or QAM modulated symbols onto respective sub-carriers and subsequently transforming the frequency domain signals to a time domain signal; a cyclic prefix (CP) insertion stage (5) providing a cyclic addition of the signal for facilitating suppression of multipath effects in the receiver stage; a baseband filter 6 for out-of-band suppression; a digital to analogue converter (DAC) (7); and a radio frequency transmit stage (RF TX) (8) for up-converting and amplifying the baseband signal to a high frequency transmit signal.

In fig. 2, a conventional receiver has been shown comprising a receive amplification input stage RF RX 12 an analogue to digital conversion stage (ADC) 13 for converting the high frequency signal to a baseband signal; a baseband filter stage 14; a cyclic prefix removal stage 15; a frequency offset compensator 16 a Fast Fourier Transform stage 17 for transforming the baseband signal to frequency domain signals relating to the individual sub-channels. The receiver moreover comprises a demodulation stage 18 for decoding the information (BPSK/ QAM) of the individual frequency domain signals back into bit estimates; using a channel estimation signal output from a channel estimator stage 21. Finally, a decoding stage 19 decodes the received signal into the original data frame format.

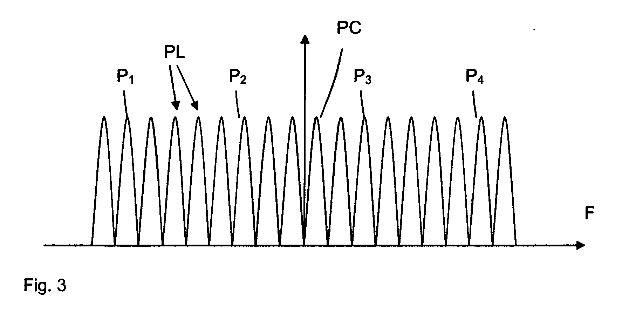

In fig. 3, the frequency domain signal being output from the inverse fast Fourier transmission stage 4 of the conventional transmitter of fig. 1 has been shown. As shown, the spectrum is divided into a plurality of orthogonal carrier channels, comprising a number of payload data channels PL and four pilot signals P1 - P4. Similarly to the IEEE 802.11 a standard, there may be 48 payload carrier channels and 4 pilot channels whereby the payload signals may be Quadrature Amplitude Modulated (QAM or any higher order of QAM modulation (n-QAM)) while the pilot signals may be binary phase shift keyed (BPSK).

### First embodiment of transmitter

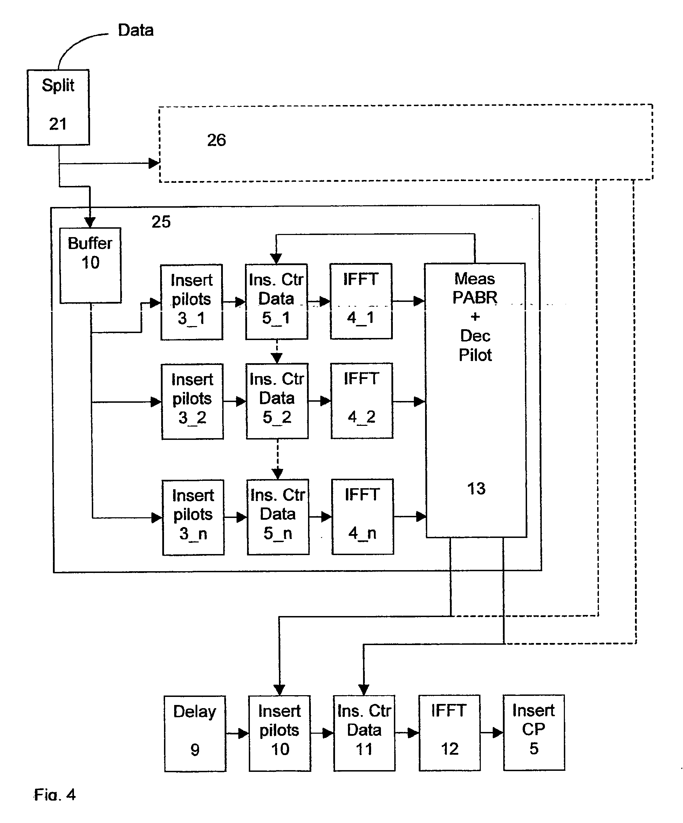

In fig. 4, a block diagram of the transmitter according to a first preferred embodiment of the invention has been shown. It should be understood that stages 6, 7 and 8 are the same as those shown with regard to fig. 1. According to the invention - periods of data frames are intermittently split by splitter 21 into identical units 25 and 26.

Having regard to unit 25, the data is stored in buffer 10, wherefrom data is read out in a predetermined order into mapper 20 from which data is subsequently being provided in parallel to a plurality a pilot insertion stages 3_1, 3_2 ... 3_n.

In each respective pilot insertion stage, a predetermined configuration of pilot signals, PC, is applied to the various predetermined sub-carriers P1 - P4. The configurations in each stage shall be different from one another. The individual pilot symbols, on the other hand, may be chosen arbitrarily as long as the configurations are unique. The payload data channels may be the same as shown in fig. 3.

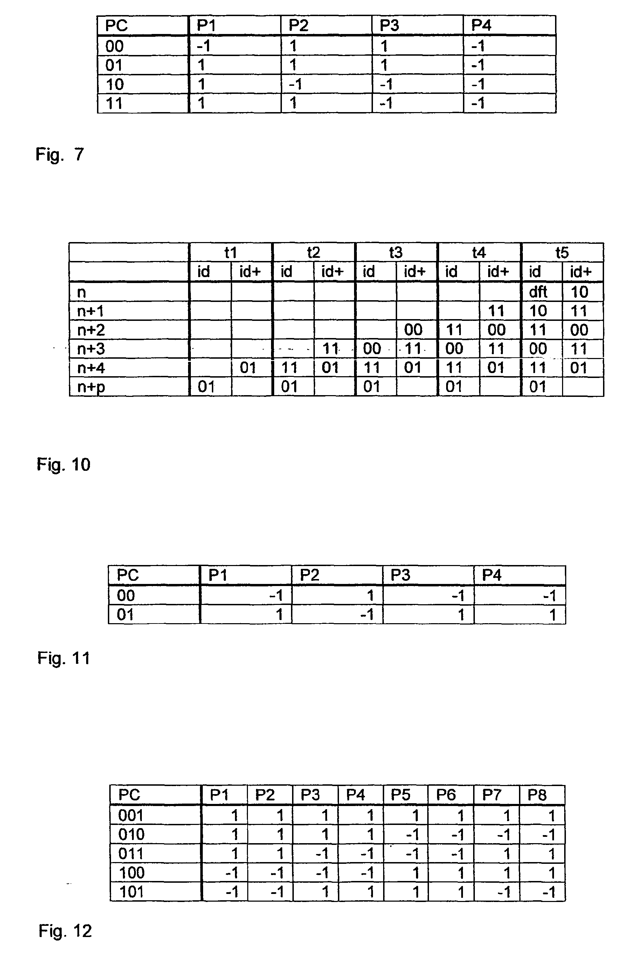

In fig. 7, four exemplary BPSK pilot configurations being designated 00, 01, 10 and 11 have been shown for pilot channels P1 - P4. Each pilot configuration is being inserted in a respective pilot insertion stage, such that stage 3_1 makes use of pilot configuration 00; stage 3_2 makes use of pilot configuration 01 and so forth. For instance in the configuration 00, the first pilot P1 = -1, the second pilot P2 =1; P3 = 1 and P4 = -1.

As appears, each respective signal from the pilot insertion stage 3_1 - 3_n is subsequently processed in respective control word insertion stages 5_1 to 5_n, whose function shall be described later and to IFFT stages 4_1 - 4_n such that respective frequency domain signals are provided.

The insertion of a given pilot configuration in the stream of payload data will give rise to a specific output signal from the respective Inverse Fast Fourier Transmission stage.

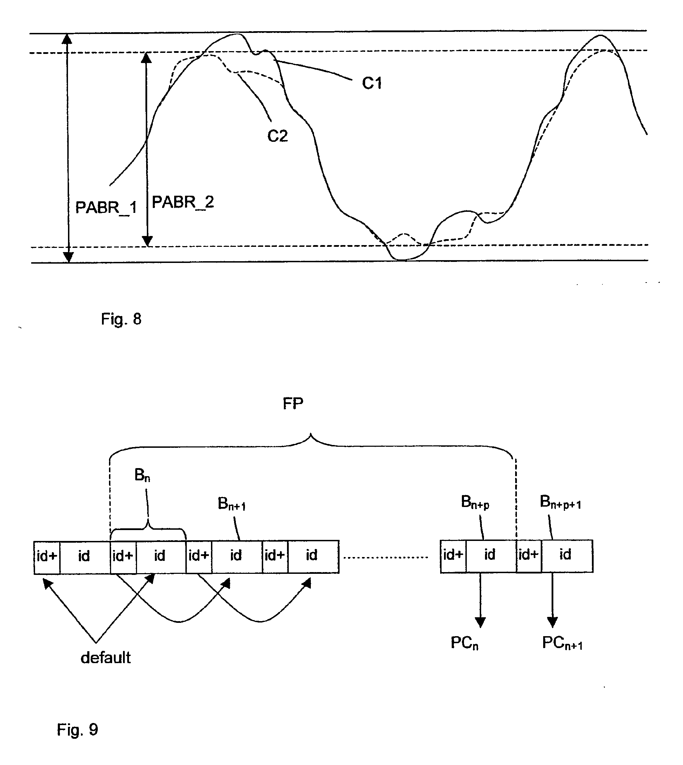

In fig. 8, a first schematic output signal C1 corresponding e.g. to the configuration 01 being associated with a first PAPR value PAPR_1 and a second schematic output signal C2 corresponding e.g. to the configuration 10 being associated with a second PAPR value PAPR_2 have been illustrated.

As appears, the PAPR values differ because of the variations in the pilot configurations.

According to the present invention, the PAPR evaluation and pilot decision stage 13 carries out an evaluation of the PAPR values as provided by the respective IFFT stages 4_1 - 4_n and chooses the pilot configuration, which is associated with the lowest value and stores results temporarily.

The idea here is that from a PAPR point of view it is advantageous to substitute fewer sub-carriers more often in order to obtain a given pilot-to-data ratio (PDR). If there is more than one pilot configuration that can be chosen, it is possible to choose the configuration that minimises the PAPR. From the receivers point-of-view it is not important which pilot configuration is chosen, only that it is known.

Parallel to the pilot insertion stages 3_1 - 3-n, the delay stage 9 stores a predetermined number of payload data frames, each frame comprising the payload data, which is to be transferred over the payload channels.

Internally in the PAPR measurement and pilot decision device 13, the data frames comprising the id+ portion are intermediately stored. When all frames are processed as indicated at time t5 in fig. 10, the chosen pilots and control words are inserted in frames to be transmitted in correct order in step 10 and step 11, respectively.

There are two methods to let the receiver know the specific bit pattern of the pilot configuration: Either specific information of which pilot configuration is to be used is signalled in advance by the transmitter or such information is derived directly from the pilot configuration by the receiver.

According to the first embodiment of the invention, information about the chosen pilot configuration is transmitted in advance. This information denoted control data is inserted on one predetermined payload channel, PL, in stage 11 and stages 5_1 - 5_n of fig. 4.

In fig. 9, the frame format of received data has been shown for incoming frames Bₙ₋₁ to Bₙ₊ₚ₊₁. One part of the frame Id+, as coded on one of the data payload carriers, is a control word that indicates which pilot configuration, PC, will be used in a subsequent frame or in a frame of any predetermined subsequent order number.

By way of illustration, the other portion of the frame, PL, contain data, which has been coded according to a respective pilot configuration.

In fig. 10, an exemplary illustration of a given stream of data frames has been shown. Stages 9, 10, 11 and 13 are performing calculations according to a certain frame period FP. In fig. 10, the frame period is, by way of example, set to six frames. The processing of PAPR detection and evaluation in stage 13 is initially performed on frame Bn+5 (or Bn+p) at time t1. However, before the PAPR evaluation is carried out, a predetermined default pilot configuration is inserted as control word (id+). In the present example, the pilot configuration designated by 01 is inserted. Hence, a given pilot configuration is estimated for frame Bn+5. This information is coded as control word on the preceding frame Bn+4 via control word insertion stages 5_1 - 5_n and 11. Since now one of the payload channels are coded with a control word id+, the remaining payload data of frame Bn+4 must be PAPR evaluated with respect to the inserted control word. At time t2 this evaluation is carried out, and by way of example pilot configuration 11 is found to optimise PAPR value.

Hence, the transmitter processes the buffered frames in opposite order to the incoming frames. When frame Bn is reached at time t5, a default pilot configuration, dft, is used, such that synchronicity can be obtained for a subsequent frame period, FP.

It appears that every 6'th frame word will not be optimised with regard to PAPR. Hence, a compromise will have to be made between processing delay and PAPR value as determined by the frame period.

Returning now to fig 4, the optimised pilot signal is inserted on a given frame B in stage 10, while in stage 11, the control word id+ as given by the evaluation unit 9 is inserted on one of the payload channels PL enabling subsequent detection.

As mentioned above, the other unit 26 carries out the same processes as described above on a subsequent period of frame and in this manner, units 25 and 26 work intermittently and secure that PAPR optimised frames are being transmitted. It is noted that the transmission involves a certain delay mainly depending on the frame period FP.

It is noted that many variations exist as to the number of frames being buffered or to which particular frame of a subsequent given order number the control word is associated.

### First embodiment of receiver

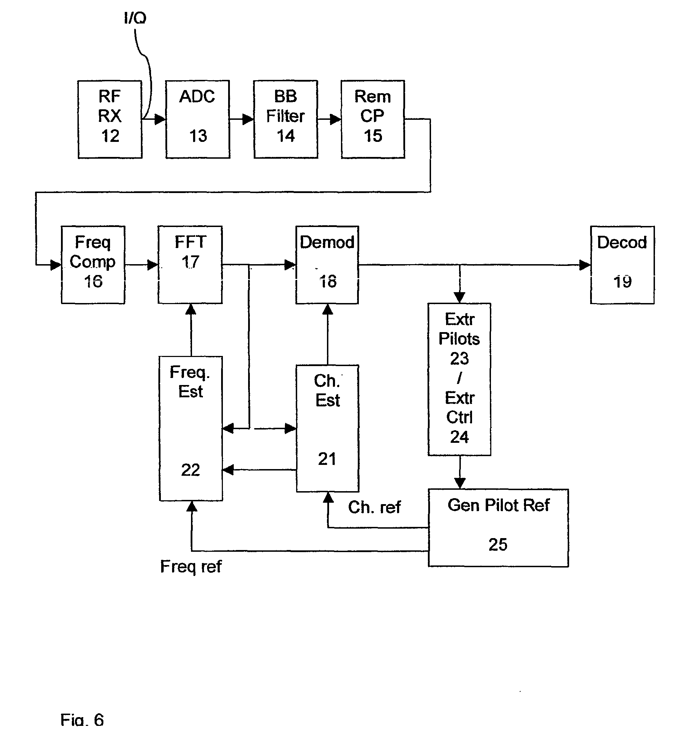

In fig. 6, a first embodiment of the receiver according to the invention has been shown. According to the first embodiment of the receiver according to the invention, which is meant for operation together with the transmitter according to the first embodiment, a control word extraction stage 23 is provided.

The control word extraction stage 24 extracts the control word, id+, from the output of the demodulator 18. The pilot reference generator 25 transforms the pilot configuration information into the corresponding BPSK symbols for each pilot sub-carrier, e.g. according to the control information as set out in the table of fig. 7.

From signals generated by the pilot reference generator above, a respective frequency reference signal, which is necessary for the frequency estimation stage 17 and a respective channel reference signal for the channel estimation stage 21, are provided, such that correct decoding can be performed at stage 19.

### Conclusion

In conclusion, it is noted that the present invention improves PAPR performance in for instance OFDM modulated transmission systems. The present invention can be readily used, in order to allow data transmission for fast moving vehicles. The method proposed here shows how to choose the pilots in order to minimise the PAPR with no extra penalty, such as decrease in data rate. Having regard to wireless local area networks such as IEEE 802.11a the invention is apt as a modification to the physical layer (PHY) of such existing wireless LAN protocols. The present invention requires no modifications to the MAC (Media Access Control layer) signalling of such protocols.

It should be noted that the present invention is not limited for application to wireless LAN systems, but is applicable to systems in which a robust data transmission is desirable; hence, systems of which scope are defined in the appended claims.

## Claims

1. Method of communicating consecutive frames (Bn, Bn+1) of digital data by OFDM modulated signals comprising,
mapping payload data on a subset of a plurality of frequency orthogonal sub-carriers,
inserting a unique pilot configuration on at least another subset of sub-carriers, and transmitting the frame, whereby the insertion of a given pilot configuration (PC) into the stream of payload data will give rise to a specific output signal being associated with a given PAPR value, wherein
each individual frame of (Bn, Bn+1) of payload data to be transmitted over the pay-load carrying sub-carriers is associated with a given unique pilot configuration (PC) chosen from a sub-set (00 - 11, 001 - 101) of predetermined pilot configurations, each pilot configuration (PC) forming a unique pattern of predetermined pilot symbols (-1, 1), and **characterized in that**
prior to the transmission of at least one given frame (Bn, Bn+1) of payload data (PL), each pilot configuration (PC) of the sub-set is evaluated with regard to PAPR for the associated frame of payload data (PL), whereby the pilot configuration (PC) being associated with the lowest PAPR value is being chosen for transmission,
a control word (id+) indicative of the pilot configuration (PC) associated with a subsequent frame (Bn+1) or a particular frame of a subsequent given order number is inserted into the frame (Bn) and coded on a predetermined sub-carrier of the plurality of payload (PL) carrying sub-carriers,
wherein said evaluation with regard to PAPR is performed on the complete frame comprising both payload data (PL) and the control word (id+) for every frame in a frame period (FP) of a first number of frames (n1..n+p)
except the first frame in the frame period (FP), where a default pilot configuration (dft) is used

2. Method according to claim 1, wherein a number (p) of incoming frames (Bₙ - Bn+p) in a frame period (FP) are buffered in a buffer (10) and wherein the buffered incoming frames are processed in opposite order to the incoming frames.

3. Method according to any of claims 1 -2, wherein for the frame using said default pilot configuration (dft), the frame is not optimized with regard to PAPR.

4. Method according to any of claims 1 - 2, wherein for the frame using said default pilot configuration (dft), the synchronicity can be obtained for a subsequent frame period (FP).

5. Method according to any previous claim, wherein the sub-carriers (P1 - P4) carrying the pilot signals are digitally modulated at a lower order (BPSK) than sub-carriers (PL) carrying the payload data (QAM).

6. Method according to any previous claim, wherein the sub-channels are modulated by BPSK or n-QAM modulation.

7. Transmitter comprising
a mapping stage (2), adapted for mapping payload data on a subset of a plurality of frequency orthogonal sub-carriers
a plurality of parallel-coupled pilot insertion stages (3_1 - 3_2) coupled to the mapping stage, each pilot insertion stage adapted for inserting a unique pilot configuration on at least another subset of sub-carriers,
the insertion of a given pilot configuration (PC) into the stream of payload data will give rise to a specific output signal being associated with a given PAPR value, wherein
a respective inverse fast Fourier transmission stage (4_1 - 4_n) adapted for processing signals from each respective pilot insertion stage (3_1 - 3_n),
a PAPR measuring and pilot decision stage (13), adapted for measuring and evaluating PAPR for each unique pilot configuration whereby
each individual frame of (Bn, Bn+1) of payload data to be transmitted over the payload channels is associated with a given unique pilot configuration (PC) chosen from a sub-set (00 - 11, 001 - 101) of predetermined pilot configurations, each pilot configuration (PC) forming a unique pattern of predetermined pilot symbols (-1, 1), and **characterized by**
prior to the transmission of at least one given frame (Bn, Bn+1) of payload data (PL), the PAPR measuring and pilot decision stage (13) being adapted for evaluating each pilot configuration (PC) of the sub-set is with regard to PAPR for the associated frame of payload data (PL), whereby the pilot configuration (PC) being associated with the lowest PAPR value is being chosen for transmission
the transmitter moreover comprising a control word insertion stage (11), adapted for,
inserting a control word (id+) indicative of the pilot configuration (PC) associated with a subsequent frame (Bn+1) or a particular frame of a subsequent given order number is into the frame (Bn) and coded on a predetermined sub-carrier of the plurality of payload (PL) carrying sub-carriers, further being adapted for
performing said evaluation with regard to PAPR on the complete frame comprising both payload data (PL) and the control word (id+) for every frame in a frame period (FP) of a first number of frames (n+1..n+p)
except for the first frame in the frame period (FP), where a default pilot configuration (dft) is used_{.}

8. Transmitter according to claim 7, wherein a number (p) of incoming frames (Bₙ - Bₙ₊ₚ) in a frame period (FP) are buffered in a buffer (10) and are processed in opposite order to the incoming frames.

9. Transmitter according to any of claims 7 - 8, wherein for the frame using said default pilot configuration (dft), the frame is not optimized with regard to PAPR.

10. Transmitter according to any of claims 7 - 8, wherein for the default pilot configuration (dft), the synchronicity can be obtained for a subsequent frame period (FP).

## Patentansprüche

1. Verfahren zum Kommunizieren von aufeinanderfolgenden Rahmen (Bn, Bn+1) von Digitaldaten durch OFDM-modulierte Signale, umfassend:
Abbilden von Nutzdaten auf eine Teilmenge einer Vielzahl von Zwischenträgern mit orthogonalen Frequenzen,
Einfügen einer eindeutigen Pilotkonfiguration auf mindestens einer anderen Teilmenge von Zwischenträgern und Übertragen des Rahmens, wodurch das Einfügen einer gegebenen Pilotkonfiguration (PC) in den Strom von Nutzdaten dazu führt, dass ein spezifisches Ausgangssignal mit einem gegebenen PAPR-Wert assoziiert wird, worin
jeder einzelne Rahmen von (Bn, Bn+1) von Nutzdaten, der über die Nutzdaten tragenden Zwischenträger übertragen werden soll, mit einer gegebenen eindeutigen Pilotkonfiguration (PC) assoziiert wird, die aus einer Teilmenge (00 - 11, 001 - 101) von vorbestimmten Pilotkonfigurationen ausgewählt wird, wobei jede Pilotkonfiguration (PC) ein eindeutiges Muster von vorbestimmten Pilotsymbolen (-1, 1) formt, und **dadurch gekennzeichnet, dass**
vor der Übertragung von mindestens einem gegebenen Rahmen (Bn, Bn+1) von Nutzdaten (PL) jede Pilotkonfiguration (PC) der Teilmenge mit Bezug auf das PAPR für den assoziierten Rahmen von Nutzdaten (PL) bewertet wird, wodurch die Pilotkonfiguration (PC) zur Übertragung ausgewählt wird, die mit dem niedrigsten PAPR-Wert assoziiert ist;
ein Steuerwort (id+), das die mit einem nachfolgenden Rahmen (Bn+1) oder einem bestimmten Rahmen einer nachfolgenden gegebenen Ordnungsnummer assoziierte Pilotkonfiguration (PC) anzeigt, in den Rahmen (Bn) eingefügt wird und auf einem vorbestimmten Zwischenträger der Vielzahl von Nutzdaten (PL) tragenden Zwischenträgern codiert wird,
worin die Bewertung mit Bezug auf das PAPR auf dem vollständigen Rahmen ausgeführt wird, der sowohl Nutzdaten (PL) als auch das Steuerwort (id+) umfasst für jeden Rahmen in einer Rahmenperiode (FP) einer ersten Anzahl von Rahmen (n+1...n+p),
mit Ausnahme des ersten Rahmens in der Rahmenperiode (FP), wo eine Default-Pilotkonfiguration (dft) benutzt wird.

2. Verfahren nach Anspruch 1, worin eine Anzahl (p) von eingehenden Rahmen (Bₙ - Bₙ₊ₚ) in einer Rahmenperiode (FP) in einen Puffer (10) gepuffert werden und worin die gepufferten eingehenden Rahmen in umgekehrter Reihenfolge zu den eingehenden Rahmen verarbeitet werden.

3. Verfahren nach einem der Ansprüche 1 - 2, worin für den die Default-Pilotlconfiguration (dft) verwendenden Rahmen der Rahmen mit Bezug auf das PAPR nicht optimiert wird.

4. Verfahren nach einem der Ansprüche 1 - 2, worin für den die Default-Pilotkonfiguration (dft) verwendenden Rahmen die Synchronizität für eine nachfolgendende Rahmenperiode (FP) erlangt werden kann.

5. Verfahren nach einem vorhergehenden Anspruch, worin die die Pilotsignale tragenden Zwischenträger (P1 - P4) auf einer niedrigeren Ordnung digital moduliert werden (BPSK) als Zwischenträger, die die Nutzdaten (PL) tragen (QAM).

6. Verfahren nach einem vorhergehenden Anspruch, worin die Unterkanäle durch BPSK- oder n-QAM-Modulation moduliert werden.

7. Sender, umfassend:
eine Abbildungsstufe (2), zum Abbilden von Nutzdaten auf eine Teilmenge einer Vielzahl von Zwischenträgern mit orthogonalen Frequenzen angepasst,
eine Vielzahl von parallel gekoppelten Piloteinfügungsstufen (3_1 - 3_2), an die Abbildungsstufe gekoppelt, wobei jede Piloteinfügungsstufe dazu angepasst ist, eine eindeutige Pilotkonfiguration auf mindestens einer anderen Teilmenge von Zwischenträgern einzufügen,
wobei die Einfügung einer gegebenen Pilotkonfiguration (PC) in den Strom von Nutzdaten dazu führt, dass ein spezifisches Ausgangssignal mit einem gegebenen PAPR-Wert assoziiert wird, worin
eine jeweilige inverse schnelle Fourier-Transmissionsstufe (4_1 - 4_n) zur Verarbeitung von Signalen von jeder jeweiligen Piloteinfügungsstufe (3_1 - 3_n) angepasst ist,
eine PAPR-Messungs- und Pilotentscheidungsstufe (13) dazu angepasst ist, das PAPR für jede eindeutige Pilotkonfiguration zu messen und zu bewerten, wodurch
jeder einzelne Rahmen von (Bn, Bn+1) von Nutzdaten, die über die Nutzdatenkanäle übertragen werden sollen, mit einer gegebenen eindeutigen Pilotkonfiguration (PC) assoziiert ist, die aus einer Teilmenge (00 - 11, 001 - 101) von vorbestimmten Pilotkonfigurationen ausgewählt wird, wobei jede Pilotkonfiguration (PC) ein eindeutiges Muster von vorbestimmten Pilotsymbolen (-1, 1) formt, und
**dadurch gekennzeichnet, dass**
vor der Übertragung von mindestens einem gegebenen Rahmen (Bn, Bn+1) von Nutzdaten (PL) die PAPR-Messungs- und Pilotentscheidungsstufe (13) dazu angepasst ist, jede Pilotkonfiguration (PC) der Teilmenge mit Bezug auf das PAPR für den assoziierten Rahmen von Nutzdaten (PL) zu bewerten, wodurch die Pilotkonfiguration (PC) zur Übertragung ausgewählt wird, die mit dem niedrigsten PAPR-Wert assoziiert ist,
wobei der Sender außerdem eine Steuerwort-Einfügungsstufe (11) umfasst, die angepasst ist, um
ein Steuerwort (id+), das die mit einem nachfolgenden Rahmen (Bn+1) oder einem bestimmten Rahmen einer nachfolgenden gegebenen Ordnungsnummer assoziierte Pilotkonfiguration (PC) anzeigt, in den Rahmen (Bn) einzufügen und auf einem vorbestimmten Zwischenträger der Vielzahl von Nutzdaten (PL) tragenden Zwischenträgern codiert wird, außerdem angepasst ist, um
die Bewertung mit Bezug auf das PAPR auf dem vollständigen Rahmen auszuführen, der sowohl Nutzdaten (PL) als auch das Steuerwort (id+) umfasst für jeden Rahmen in einer Rahmenperiode (FP) einer ersten Anzahl von Rahmen (n+1 ....n+p),
mit Ausnahme des ersten Rahmens in der Rahmenperiode (FP), wo eine Default-Pilotkonfiguration (dft) benutzt wird.

8. Sender nach Anspruch 7, worin eine Anzahl (p) von eingehenden Rahmen (Bₙ - Bₙ₊ₚ) in einer Rahmenperiode (FP) in einen Puffer (10) gepuffert werden und in umgekehrter Reihenfolge zu den eingehenden Rahmen verarbeitet werden.

9. Sender nach einem der Ansprüche 7 - 8, worin für den die Default-Pilotkonfiguration (dft) verwendenden Rahmen der Rahmen mit Bezug auf das PAPR nicht optimiert wird.

10. Sender nach einem der Ansprüche 7 - 8, worin für die Default-Pilotkonfiguration (dft) die Synchronizität für eine nachfolgendende Rahmenperiode (FP) erlangt werden kann.

## Revendications

1. Procédé destiné à communiquer des trames consécutives (Bn, Bn+1) de données numériques par le biais de signaux modulés via un multiplexage par répartition orthogonale de la fréquence (OFDM), comportant les étapes ci-dessous consistant à,
représenter des données utiles sur un sous-ensemble d'une pluralité de sous-porteuses à fréquence orthogonale,
introduire une configuration pilote unique sur un autre sous-ensemble de sous-porteuses, et transmettre la trame, moyennant quoi l'introduction d'une configuration pilote donnée (PC) dans le flux des données utiles donnera lieu à un signal de sortie spécifique associé à une valeur de rapport puissance maximale à puissance moyenne (PAPR) donnée, où
chaque trame individuelle (Bn, Bn+1) de données utiles à transmettre sur les sous-porteuses de transport de données utiles est associée à une configuration pilote unique donnée (PC) sélectionnée à partir d'un sous ensemble (00 - 11, 001 - 101) de configurations pilote prédéterminées, chaque configuration pilote (PC) formant un motif unique de symboles pilotes prédéterminés (-1, 1), et **caractérisé en ce que**
préalablement à la transmission d'au moins une trame donnée (Bn, Bn+1) de données utiles (PL), chaque configuration pilote (PC) du sous-ensemble est évaluée relativement au rapport PAPR de la trame associée de données utiles (PL), moyennant quoi la configuration pilote (PC) qui est associée à la plus petite valeur de rapport PAPR est sélectionnée pour la transmission,
un mot de contrôle (id+) représentatif de la configuration pilote (PC) associée à une trame subséquente (Bn+1) ou à une trame spécifique d'un numéro de séquence donné subséquent est introduit dans la trame (Bn) et codé sur une sous-porteuse prédéterminée de la pluralité de sous-porteuses de transport de données utiles (PL),
dans lequel ladite évaluation relativement au rapport PAPR est mise en oeuvre sur la trame complète comportant à la fois les données utiles (PL) et le mot de contrôle (id+) pour chaque trame dans une période de trame (FP) d'un premier nombre de trames (n+1... n+p)
hormis pour la première trame dans la période de trame (FP) où une configuration pilote par défaut (dft) est utilisée.

2. Procédé selon la revendication 1, dans lequel un nombre (p) de trames entrantes (Bₙ - Bₙ₊ₚ) dans une période de trame (FP) est mis en mémoire tampon dans une mémoire tampon (l0) et dans lequel les trames entrantes mises en mémoire tampon sont traitées dans un ordre opposé à celui-ci des trames entrantes.

3. Procédé selon l'une quelconque des revendications 1 à 2, dans lequel, pour la trame faisant appel à ladite configuration pilote par défaut (dft), la trame n'est pas optimisée relativement au rapport PAPR.

4. Procédé selon l'une quelconque des revendications 1 à 2, dans lequel, pour la trame faisant appel à ladite configuration pilote par défaut (dft), le synchronisme peut être obtenu pour une période de trame subséquente (FP).

5. Procédé selon l'une quelconque des revendications précédentes, dans lequel les sous-porteuses (P1 - P4) transportant les signaux pilotes sont modulées numériquement à un état inférieur (BPSK) à celui de sous-porteuses (PL) transportant les données utiles (QAM).

6. Procédé selon l'une quelconque des revendications précédentes, dans lequel les sous-canaux sont modulés par le biais d'une modulation BPSK ou d'une modulation n-QAM.

7. Émetteur comportant
une étape de représentation (2) apte à représenter des données utiles sur un sous-ensemble d'une pluralité de sous-porteuses à fréquence orthogonale
une pluralité d'étapes d'introduction pilotes couplées en parallèle (3_1 - 3_2) couplés à l'étape de représentation, chaque étape d'introduction pilote étant apte à introduire une configuration pilote unique sur au moins un autre sous-ensemble de sous-porteuses,
l'introduction d'une configuration pilote donnée (PC) dans le flux de données utiles donnera lieu à un signal de sortie spécifique associé à une valeur de rapport puissance maximale à puissance moyenne (PAPR) donnée, où
une étape de transmission de transformée de Fourrier rapide inverse (4_1 - 4_n) est apte à traiter des signaux en provenance de chaque étape respective d'introduction pilote (3_1 - 3_n),
une étape de décision pilote et de mesure de rapport PAPR (13) est apte à mesurer et à évaluer le rapport PAPR de chaque configuration pilote unique, moyennant quoi
chaque trame individuelle (Bn, Bn+1) de données utiles à transmettre sur les canaux de données utiles est associée à une configuration pilote unique donnée (PC) sélectionnée à partir d'un sous ensemble (00 - I1, 001 - 101) de configurations pilote prédéterminées, chaque configuration pilote (PC) formant un motif unique de symboles pilotes prédéterminés (-1, 1), et **caractérisé en ce que**
préalablement à la transmission d'au moins une trame donnée (Bn, Bn+1) de données utiles (PL), l'étape de décision pilote et de mesure de rapport PAPR (13) est apte à évaluer chaque configuration pilote (PC) du sous-ensemble relativement au rapport PAPR de la trame associée de données utiles (PL), moyennant quoi la configuration pilote (PC) qui est associée à la plus petite valeur de rapport PAPR est sélectionnée pour la transmission,
l'émetteur comporte en outre une étape d'introduction de mot de contrôle (11) apte à
introduire un mot de contrôle (id+) représentatif de la configuration pilote (PC) associée à une trame subséquente (Bn+1) ou à une trame spécifique d'un numéro de séquence donné subséquent dans la trame (Bn), et codée sur une sous-porteuse prédéterminée de la pluralité de sous-porteuses de transport de données utiles (PL), étant en outre apte à
mettre en oeuvre ladite évaluation relativement au rapport PAPR sur la trame complète comportant à la fois les données utiles (PL) et le mot de contrôle (id+) pour chaque trame dans une période de trame (FP) d'un premier nombre de trames (n+1... n+p)
hormis pour la première trame dans la période de trame (FP) où une configuration pilote par défaut (dft) est utilisée.

8. Émetteur selon la revendication 7, dans lequel un nombre (p) de trames entrantes (Bₙ - Bₙ₊ₚ) dans une période de trame (FP) est mis en mémoire tampon dans une mémoire tampon (10) et ce nombre de trames est traité dans un ordre opposé à celui-ci des trames entrantes.

9. Émetteur selon l'une quelconque des revendications 7 à 8, dans lequel, pour la trame faisant appel à ladite configuration pilote par défaut (dft), la trame n'est pas optimisée relativement au rapport PAPR.

10. Émetteur selon l'une quelconque des revendications 7 à 8, dans lequel, pour la configuration pilote par défaut (dft), le synchronisme peut être obtenu pour une période de trame subséquente (FP).
